# EUROPÄISCHE PATENTSCHRIFT

(11) **EP 0 270 188 B1**
(45) Veröffentlichungstag und Bekanntmachung des Hinweises auf die Patenterteilung: **23.03.1994**
(21) Anmeldenummer: 87202375.9
(22) Anmeldetag: 01.12.1987
(51) Int. Cl.: H04B 7/08

(54) **Signaldiversity-Anlage für den mobilen Empfang**
Signal diversity installation for mobile reception
Installation de diversité de signal pour la réception mobile

(30) Priorität: 02.12.1986 DE 3641109
(43) Veröffentlichungstag der Anmeldung: 08.06.1988
(73) Patentinhaber: FUBA Hans Kolbe & Co, 31134 Hildesheim (DE); Philips Electronics N.V., 5621 BA Eindhoven (NL)
(72) Erfinder: Lindenmeier, Karl-Heinz Georg, NL-5656 AA Eindhoven (NL); Flackenecker, Gerhard, NL-5656 AA Eindhoven (NL)
(74) Vertreter: De Jongh, Cornelis Dominicus

(56) Entgegenhaltungen:
- DE-A- 2 534 888
- US-A- 4 495 653
- 1983 INTERNATIONAL SYMPOSIUM DIGEST ANTENNAS AND PROPAGATION, Band 1, 1983, Seiten 187-190, IEEE, New York, US; K. LINDENMEIER et al.: "Multipath reception in FM car radio receivers and antenna diversity by means of a distortion detector"
- IEEE TRANSACTIONS ON VEHICULAR TECHNOLOGY, Band VT-21, Nr. 4, November 1972, Seiten 121-128, IEEE, New York, US; L. SCHIFF: "Statistical suppression of interference with diversity in a mobile-radio environment"

## Beschreibung

Die Erfindung bezieht sich auf ein Signaldiversity-Anlage für den mobilen Empfang, bestehend aus einem Empfänger und einem Diversityprozessor, dem die Eingangssignale zugeführt sind und der bei Auftreten einer Störung dem Empfänger ein anderes Eingangssignal zuführt, wobei im Diversityprozessor ein komparator vorhanden ist, dessem ersten Eingang ein Signal das für die Störung representativ ist zugeführt ist und an dessem zweiten Eingang eine geeignet eingestellte Spannung angelegt ist und der Komparator bei Überschreiten der Schwellspannung am zweiten Eingang durch das Signal an seinem Ausgang das Vorliegen einer Störung mit Hilfe eines binären Signals anzeigt und wobei mindestens ein Integrator mit Entladezeitkonstante vorgesehen ist, dem ein für die Storung representatives Signal zugeführt ist und dessen Integrationszeit gleich der Aufschaltzeit eines der Eingangssignale ist und dessen Ausgangssignal einen der beiden Eingänge des Komparators zugeführt ist.

Eine derartige Anlage ist zum Beispiel bekannt aus DE-Al-2534888 und beabsichtigt eine Diversity-Anlage zu verschaffen bei dem auch Antennen mit unterschiedlichen Gewinn verwendet werden können.

In der Anlage gemäß dieser Patentanmeldung ist das Signal das für die Störung representativ ist das Ausgangssignal des Empfängers und die Integratoren haben feste Zeitkonstanten für die Lade- und Entladevorgänge.

Aus dem Artikel "Multipath reception in FM car radio receivers and antenna diversity by means of a distortion detector" von K. Lindemeier et al in "1983 International Symposium Digest Antennas and Propagation", Band 1, 1983, Seiten 187-190, IEEE, New York, ist es bekannt ein Störungsdetektor zu verwenden zur Ermittlung, ob die Signalqualität eine bestimmte Schwelle unterschreitet.

Weiter ist aus NTG-Fachberichte, Band 72 (VDE-Verlag), Seite 241, Bild 5b, eine Signaldiversity-Anlage als Scanning Diversity Combiner bekannt.

In diesem Fall sucht der Diversity-Combiner aus zwei angebotenen Eingangssignalen ein Signal, dass eine bestimmte vorgegebene Spannungsschwelle Umin Überschreitet. Das Unterschreiten dieses Pegels wird im Sinne des Combiners als Störung bewerted und am Ausgang des digital arbeitenden Störungsdetektors, der im Fall des dargestellten Combiners aus einem Komparators mit Schwellenspannung besteht, entsteht ein Signal, das den Schalter in die andere Position umschaltet. Eine derartige Anordnung besitzt den Nachteil, dass bei Auftreten der so definierten Störung der Schalter jeweils in die andere Position gebracht wird, unabhängig davon, ob an dem neu anzuschaltende Signaleingang in der Vergangenheit ein qualitativ gutes oder schlechtes Signal angelegen hat. Ist zum Beispiel die Spannung an einem der beiden Signaleingänge über eine längere Zeitspanne im Mittel wesentlich geringer als am anderen Eingang, so würde bie kurzzeitigem Unterschreiten von Umin am Signaleingang mit dem im Mittel grösseren Signal ein Umschaltvorgang zum Eingang mit dem im Mittel schlechteren Signal eingeleitet, obgleich dort mit grosser Wahrscheinlichkeit ein noch schlechteres Signal vorliegt. In einem solchen Fall schaltet das System häufig mit einer sehr hohen Schaltgeschwindigkeit zwischen den Signaleingängen hin und her. Dies führt zu einer zusätzlichen Unruhe im System mit einer daraus resultierenden Absenkung der Qualität des zum Empfänger durchgeschalteten Signals. Bei der Anwendung von Antennendiversity ergeben sich im Empfangsbetrieb daraus störende Geräusche im Takt der Schaltfrequenz, die häufig als Umschaltstörungen gewerted werden.

Aufgabe der Erfindung ist es, bei einer Signaldiversity-Analge (1) für den mobilen Empfang einen Signaleingang mit einem im Mittel mehr gestörten Signal weniger zum Empfänger durchzuschalten als einen Signaleingang, der im Mittel ein weniger gestörtes Signal aufweist.

Diese Aufgabe wird erfindungsgemäß dadurch gelöst, daß im Diversityprozessor ein analog arbeitender Störungsdetektor vorgesehen ist; daß das am ersten Eingang des Komparators zugeführte Signal ein Ausgangssignal dieses Störungsdetektors ist; daß in der Signaldiversity-Anlage ein Störungshäufigkeitsdetektor vorgesehen ist, dem ein Ausgangssignal des analog arbeitenden Störungsdetektors zugeführt ist und daß das am Ausgang des Störungshäufigkeitsdetektors vorhandene Ausgangssignal proportional der mittleren Störhäufigkeit ist und den Integrator Zugeführt ist und die Zeitkonstanten Lade- und Entladevorgänge im Integrator mit Hilfe dieses Signals mit steigender Störungshäufigkeit verkleinert werden.

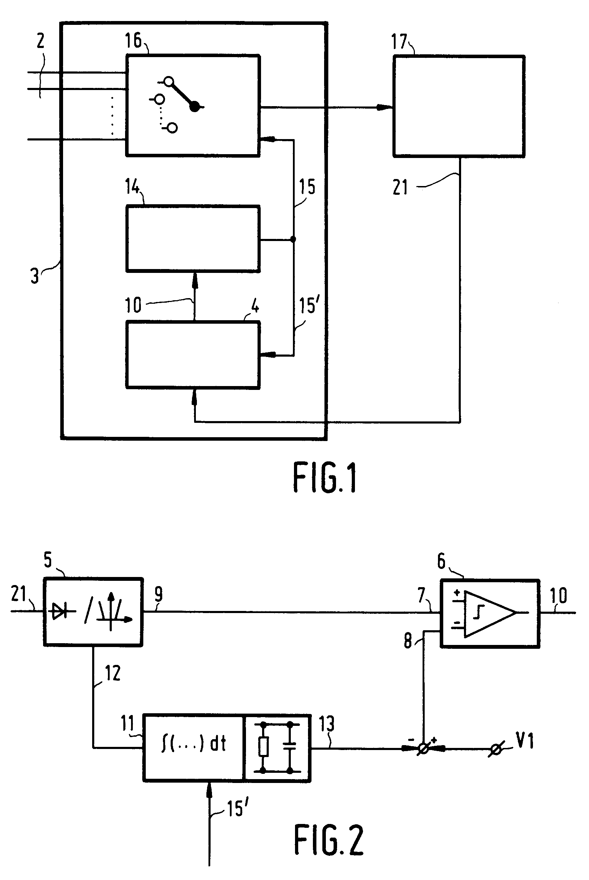

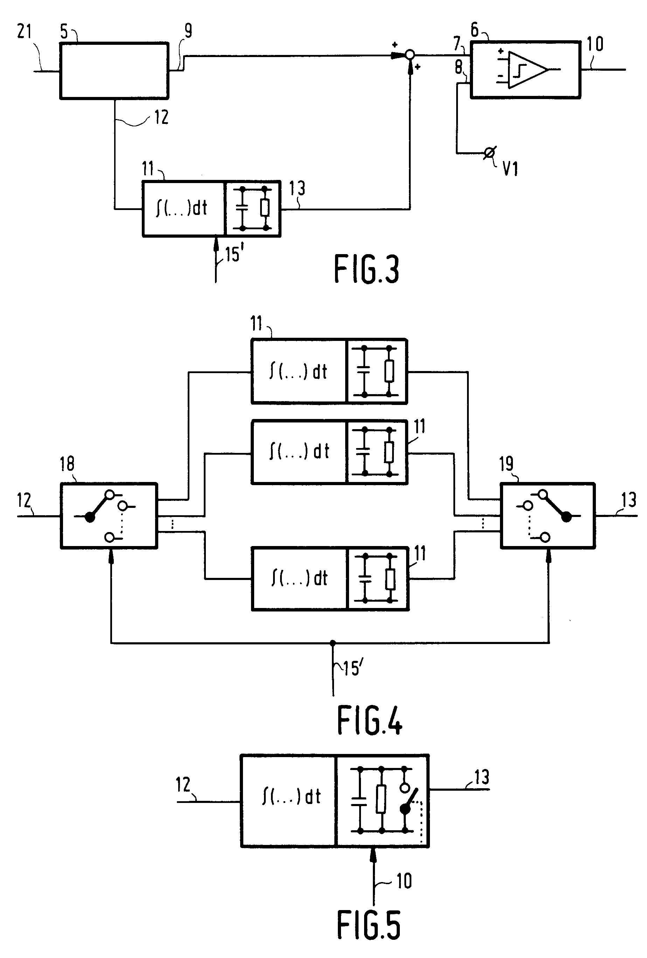

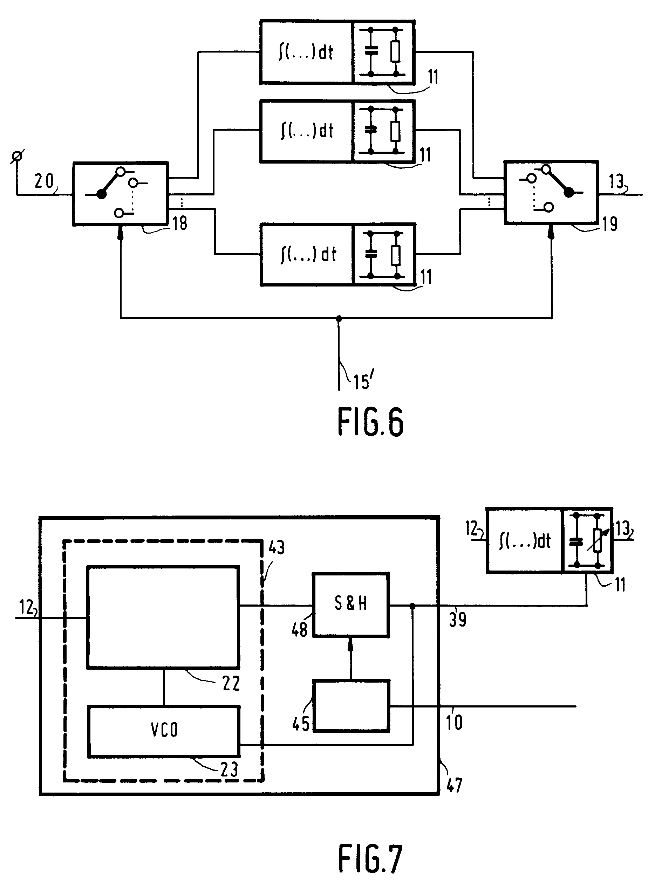

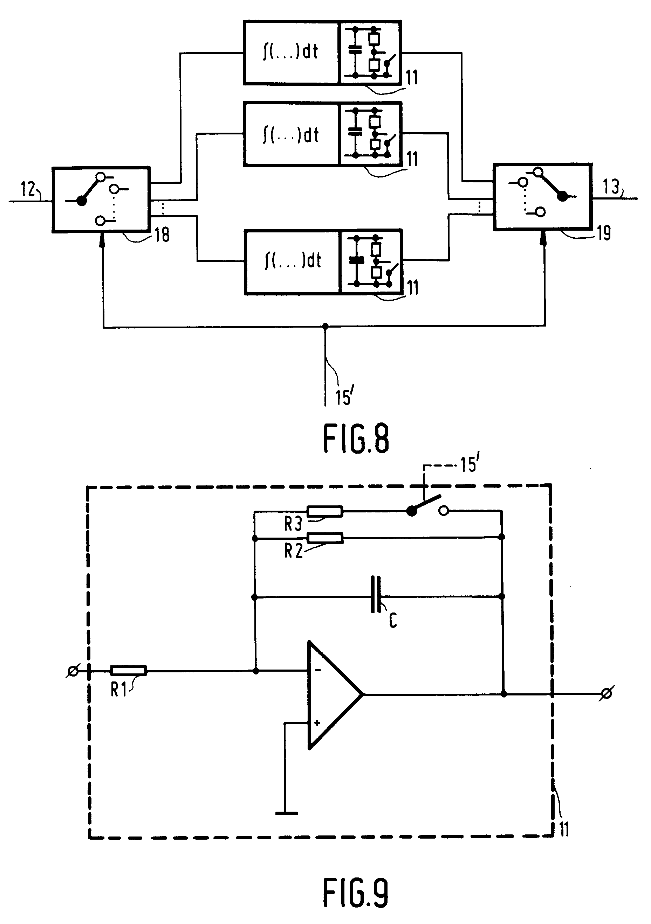

Im folgenden wird die Erfindung anhand des Figuren 1 bis 9 erläutert. Im einzelnen zeigen
Bild 1: Signaldiversity-Analge für den mobilen Empfang nach der Erfindung bestehend aus einem Diversity-Prozessor (3) mit erfindungsgemässer Störungserkennung (4), Signalsauswahlschaltung (14), Signalselektor (16) und nachgeschaltetem Empfänger (17).
Bild 2: Störungsekennungsschaltung (4), bestehend aus einem analog arbeitenden Störungsdetektor (5) mit nachgeschaltetem Integrator (11) mit Entladezeitkonstante und einem Komparator (6), dem das Ausgangssignal des Integrators negativ am zweiten Eingang (8) zugeführt ist.
Bild 3: Störungserkennungsschaltung (4), bestehend aus einem analog arbeitenden Störungsdetektor (5) mit nachgeschaltetem Integrator (11) mit Entladezeitkonstante und einem Komparator (6), dem das Ausgangssignal des Integrators (11) positiv am ersten Eingang (7) zugeführt ist.
Bild 4: Satz von Integratoren (11), die den entsprechenden Eingangssignalen zugeordnet sind und denen über einen Multiplexer (18) das während der Durchschaltzeit bestehende Störsignal (9) zugeführt ist und deren Ausgangssignal über den Speicherselektor (19) an den Komparator (6) weitergeleitet wird.
Bild 5: Integrator mit auf einen bestimmten Anfangswert einstellbaren Rückstellwert.
Bild 6: Satz von Integratoren (11), die den entsprechenden Eingagssignalen (2) zugeordnet sind und denen über einen Multiplexer (18), z.B. ein zeitlich konstanter Spannungswert (20) zugeführt ist, und deren Ausgangssignal über den Speicherselektor (13) an den Komparator zugeführt ist.
Bild 7: Störungshäufigkeitsdetektor, bestehend aus einer PLL-Schaltung, einer Sample & Hold-Auswertung (48) und einem Monoflop (45), das vom binären Schaltsignal (10) angesteuert wird, und die Ausgangsspannung (39) des Sample & Hold-Glieds (48) die zur Steuerung der Entladezeitkonstante im Integrator (11) herangezogen wird.
Bild 8: Satz von Integratoren (11) mit umschaltbarer Zeitkonstante für den Lade- und Entladevorgang. Die Umschaltung ist beispielhaft mit Hilfe von Ueberbrückungsschaltern ausgeführt.
Bild 9: Ausführungsform eines Integrators (11) mit umschaltbaren Zeitkonstanten, bestehend aus einem Operationsverstärker und einem steuerbaren Schalter, der im Takt des Adressausgangssignals (15ʹ) geschaltet wird.

Bild 1 zeich eine Signaldiversity-Anlage für den mobilen Empfang nach der Erfindung, bestehend aus einem Diversity-Prozessor (3) mit erfindungsgemässer Störungserkennung (4), Signalauswahlschaltung (14), Signalselektor (16) und nachgeschaltetem Empfänger (17). In NTG-Fachberichte Band 72 (VDE-Verlag), S. 241, Bild 5b, ist im Scanning-Diversity-Combiner anstelle der Störungserkennung (4) und der Signalauswahlschaltung (14) ein Komparator mit Spannungsschwelle angegeben. Diese Spannungsschwelle ist dort ein zeitlich unveränderlicher Wert. In Bild 1 der vorliegenden Erfindung beinhaltet die Störungserkennung (4) ebenso eine Schwelle, bei deren Ueberschreitung das binäre Ausgangssignal (10) die Präsenz einer Störung anzeigt. Dieses binäre Signal schaltet eine Signalauswahlschaltung (14) um einen Schrritt weiter, so dass bei allgemeinster Anwendung des Prinzips am Ausgang der Signalauswahlschaltung (14) ein binäres Codewort (15) generiert wird, das den Signalselektor (16) in eine gewünschte Stellung bringt und somit ein definiertes Signal (2) zum Empfänger (17) durchgeschaltet wird. Nach dem Erfindungsgedanken kann die Störung unterschiedliche Herkunft besitzen. Sie kann z.B. aus Nachbarkanalstörungen, aus Gleichkanalstörungen, Rauschstörungen, Intermodulationsstörungen bzw. Mehrwegeempfansstörungen aufgrund grosser Laufzeitunterschiede bestehen.

Die Erfindung geht davon aus, dass in der Störungserkennung (4), deren Blockschaltbild beispielhaft in Bild 2, angegeben ist, ein analog arbeitender Störungsdetektor (5) vorhanden ist, der die obengenannten Störungen mit Hilfe eines Analogsignals an seinem Ausgang (9) anzeigt. Zum Einleiten einer Umschaltmassnahme ist dieses Ausgangssignal (9) des Störungsdetektors (5) ebenso an einer Schwellspannung (8) zu messen. Der Umschlatvorgang wird eingeleitet, wenn die Analogspannung (9), die einem ersten Eingang (7) eines Komparators (6) zugeführt ist, die Schwellspannung V an seinem zweiten Eingang (8) überschreitet. Damit liegt am Ausgang (10) des Komparators (6) ein binäres Signal (10) zur Ansteuerung der Signalauswahlschaltung (14) an. In einer Ausführungsform der erfindungsgedanken wird die Schwellspannung (8) geeignet ausgesteltet, derart, dass bei schlechter mittlerer Signalqualität diese Schwellspannung abgesenkt wird. Dadurch wird bewirkt, dass ein kleineres Störsignal (9) bereits zur Weiterschaltung der Anordnung durch das binäre Signal (10) bewirkt wird. Die Mittelwertsbildung für die Signalqualität geschieht mit Hilfe eines Integrators (11), dem ein der Störung entsprechendes Signal (12) eingangsseitig zugeführt wird und, der nach jeder Weiterschaltung auf einen definierten Anfangswert zurückgestellt wird. Auf besonders einfache Weise kann dieser Integrator durch eine Kapazität realisiert werden. Damit die über den Zeitraum der Vergangenheit integrierten die Störung repräsentierenden Signal (12) die Schwelle (8) nicht zu sehr absenken, ist dem integrierenden Kondensator eine Entladezeitkonstante T2 (z.B. mit parallelgeschaltetem Widerstand) beigefügt. Die Rückstellung des Integrators (11) erfolgt synchron mit der Weiterschaltung durch das binäre Adressausgangssignal (15ʹ). Damit repräsentiert das Ausgangssignal (13) den zeitlichen Mittelwert der Störung im Signal (21) während der Aufschaltzeit eines Signals. Mit wachsender Absenkung der Schwellspannung (8) wird somit das System hinsichtlich einer Störungserkennung im Signal (21) über das Störsignal (9) in seiner Anzeige empfindlicher. Das Signal (13) wird auf vorteilhafte Weise in einem Summationsglied in der in Bild 2 gezeichneten Weise mit einer Teilschwellspannung V1 überlagert. Diese Teilschwellspannung V1 repräsentiert in der Regel den Momentanwert der über alle Signaleingänge (2) gemittelten Signalqualität. Ersetzt man die Störungserkennung (4) in Bild 1 durch die Anordnung in Bild 2 mit dem Eingangssignal (21) und dem binären Ausgangssignal (10), so hat der Diversityprozessor (3) durch die Integrationsschaltung (11) den Vorteil, dass bei Anschlaten eines Signaleingangs (2) mit gestörtem Eingangssignal durch zeitliche Integration über die Aufschaltzeit dieses Eingangs die Schwellspannung (8) umso schneller abgesenkt wird, je schlechter die Signalqualität am betreffenden Eingang ist. Damit wird bei vorliegender Störung des Störsignals (9) verfrüht ein Umschaltvorgang mit Hilfe des Komparators herbeigeführt und ein im Mittel mehr gestörtes Signal wird bei gleicher momentaner Störung weniger lang zum Empfänger durchgeschaltet. Die im Empfänger hörbare Störung ist sowohl der momentanen Störung, als auch der Anschaltzeit des Störsignals nahezu proportional. Durch Herabsetzen der Anschaltzeit nach der erfindungsgemässen Massnahme wird somit die hörbare Störung vermindert. Damit bleibt ein Signal mit im Mittel besserer Qualität länger aufgeschaltet als ein Signal mit kleinerer Qualität. Dies führt bei mehreren Eingängen zu einer Verteilung der mittleren Anschaltzeiten entsprechend der Signalqualitäten an den einzelnen Eingängen.

Bild 3 zeigt eine Störungserkennungsschaltung (4) nach der Erfindung, bestehend aus einem analog arbeitenden Störungsdetektor (5) mit nachgeschaltetem Integrator (11) mit Entladezeitkonstante und einem Komparator (6). Mit dieser Schaltung kann auf vorteilhaft einfache Weise eine ähnliche Wirkung wie mit der Anordnung in Bild 2 dadurch erzielt werden, dass das nichtinvertierte Ausgangssignal (13) des Integrators (11) dem Störsignal (9) am Ausgang des analog arbeitenden Störungsdetektors (5) mit Hilfe einer Summationsschaltung, wie in Bild 3, überlagert ist, und dieses Signal dem ersten Eingang (7) des Komparators (6) zugeführt ist. Am zweiten Eingang (8) dieses Komparators liegt dann auf analoge Weise die Schwellspannung V1 an, die die oben beschriebenen Eigenschaften besitzt. Damit ist das Ausgangssignal (13) des Integrators nicht zur Bildung der Schwellspannung V am zeiten Eingang des Komparators (6) herangezogen, sondern das Mass für die mittlere Signalqualität wird der aktuellen Störung (9) additiv überlagert. Die Rücksetzung des Integrators kann analog zu der Anordnung in Bild 2 erfolgen.

Bild 4 zeigt einen Satz von Integratoren (11), die den entsprechenden Signaleingägen (2) zugeordnet sind und, denen über einen Multiplexer (18), jeweils das während der Durchschaltzeit bestehende, aus der Störung abgeleitete Signal (12) zugeführt ist. Die Ausgangssignale der Integratoren (11) werden über einen Speicherselektor (19), der synchron zum Multiplexer (18) angesteuert wird, als Signal (13) einem der beiden Eingänge des Komparators (6) zugeführt derart, dass jeweils das Ausgangssignal desjenigen Integrators am Eingang des Komparators anliegt, der dem entsprechenden Signaleingang (2) zugeordnet ist. Bei dieser Anordnung erfolgt keine Rückstellung der Integratoren (11) im Takt des Weiterschaltens der Störungserkennungsschaltung.

Diese, in Bild 4 gezeigte, Anordnung wird in einer vorteilhaften Weiterführung der Erfindung anstelle des Integrators (11) entweder in Bild 2 oder in Bild 3 eingebracht. Das Eingangssignal ist das aus der Störung abgeleitete Signal (12), das Ausgangssignal (13) wird entweder, wie in Bild 3, dem Störsignal (9) überlagert, oder, wie in Bild 2, zur Bildung der Schwellspannung V am zweiten Eingang (8) des Komparators herangezogen. Bei diesen Anordnungen ist jedem Eingang (2) ein Integrator (11) zugeordnet, der jeweils über das aus der Störung abgeleitete Signal (12) des analog arbeitenden Störungsdetektors (5) während der jeweiligen Anschaltzeit des betreffenden Signaleingangs (2) geladen wird. Die Anschaltung des Integrators bei Durchschaltung des betreffenden Signals (2) erfolgt mit Hilfe eines synchron zum Adressausgangssignal (15) gesteuerten Multiplexers (18). Bezüglich der Mittelwertsbildung mit Hilfe einer Kapazität und einem Widerstand gelten die obigen Ausführungen. Die unterschiedlichen Ausgangssignale der Integratoren (11) werden wechselweise mit Hilfe eines Speicherselektors (19), der synchron mit dem Multiplexer (18) gesteuert wird, zum gemeinsamen Ausgang durchgeschaltet. Im Gegensatz zur Störungserkennung mit nur einem Integrator arbeitet die in Bild 4 dargestellte Störungserkennung mit einem Satz von Integratoren &11), die nicht bei einer Weiterschaltung zurückgesetzt werden und deren Ladezustand während der Abschaltzeit lediglich einer Entladung gemäss einer geeignet gewählten Entladezeitkonstante (T2) unterworfen ist. Somit ist eine getrennte Bewertung der Qualitäten der an den einzelnen Signaleingängen (2) in der kürzeren Vergangenheit anliegenden Signale möglich. Diese Anordnung hat deshalb den Vorteil, dass die Signaleingänge hinsichtlich ihrer mittleren Signalqualität angenähert nach dem Range einer Prioritätenliste unterschiedlich lang zum Empfänger durchgeschaltet werden.

In einer vorteilhaften Weiterführung der Erfindung nach einer Anordnung gemäss Bild 2 werden Integratoren (11) mit auf einen bestimmten Anfangswert einstellbaren Rückstellwert, wie in Bild 5 dargestellt, verwendet. Durch geeignete Vorgabe dieses Anfangswerts kann die Wirkungsweise der Integratoren auf optimale Weise einer Empfangssituation angepasst werden.

In einer besonders einfachen Ausführungsform der Erfindung erfolgt die Bildung des Mittelwerts der Störung auf dem jeweiligen Signaleingang (2) mit Hilfe der Aufschaltzeit eines Signaleingangs. Eine Anordnung dieser Art ist in Bild 6 dargestellt. Zu diesem Zweck werden sowohl der Multiplexer (18) als auch der Speicherselektor (19) im Takt der Weiterschaltung des Signalselektors (16) weitergeschaltet. Dies geschieht mit Hilfe des Signals (15ʹ), das dem Signal zur Weiterschaltung des Signalselektors (16) identisch ist. Um ein Mass für die mittlere Auschaltzeit jedes Signaleingangs (2) getrennt zu erhalten, wird am Eingang des Multiplexers (18) eine zeitlich konstante Spannung (20) angelegt. Somit entspricht das Ausgangssignal jedes Integrators (11) mit Lade- und Entladezeitkonstanten der mittleren Aufschaltzeit der jeweiligen Signaleingäge. Bezüglich der Wahl de Zeitkonstanten T1 und T2 gelten die gleichen Gesetzmässigkeiten, wie sie für die Anordnung in Bild 4 beschrieben sind. Auf diese Weise wird auch erreicht, dass die Signaleingäge hinsichtlich ihrer mittleren Signalqualität nach dem Range einer Piroritätenliste unterschiedlich lang zum Empfänger durchgeschaltet werden.

Bild 7 stellt einen Störungshäufigkeitsdetektor, bestehend aus einer PLL-Schaltung (43), einer Sample & Hold-Auswertung (48) und einem Monoflop (45), dass vom binären Schaltsignal (10) angesteuert wird, dar. Die Ausgangsspannung des Sample & Hold-Glieds wird zur Steuerung der Entladezeitkonstante im Integrator herangezogen. Diese Anordnung ist in der Lage, die mittlere Frequenz für das Auftreten von Störungen anzuzeigen. Dies geschieht durch Frequenzvergleich des nachgeführten VCO (23) mit der Folgefrequenz der Störungen des aus der Störung abgeleiteten Signals (12). Mit Hilfe des Sample & Hold-Glieds, das mit Hilfe eines vom binären Schaltsignal (10) getriggerten Monoflops (45) getaktet wird, entsteht am Ausgang das Signal (39), mit dem die Zeitkonstanten des Integrators aud die in Anspruch 3 geschilderte Weise gesteuert werden.

Ist die Entladezeitkonstante (T2) der Integratoren (11) zu gross, so wird, aufgrund der Speicherwirkung, die in der Vergangenheit vorgelegene Qualität des Signals an einem bestimmten Eingang zu stark bewertet im Vergleich mit der aktuellen Signalqualität. Ist die Ladezeitkonstante zu gross, tritt die Wirkung der Speicher zu langsam ein. In einer besonders vorteilhaften Ausgestaltung der Erfindung erhält deshalb jeder Integrator (11), wie in Bild 8 gezeigt, eine geeignet gewählte Ladezeitkonstante T1 und eine getrennt einstellbare Entladezeitkonstante T2. Dieses wird auf an sich bekannte Weise mit Hilfe zweier verschiedener Widerstände mit Ueberbrückungsschaltern realisiert, wie es z.B. in einer einfachen Ausführungsform in Bild 8 dargestellt ist. Dieser Schalter wird erfindungsgemäss im Takt des Adressausgangssignals (15ʹ) geschaltet, so dass sich im Integrator während der Aufschaltzeit des zugehörigen Eingangs die Ladezeitkonstante T1 und während der berbleibenden Zeiten die Entladezeitkonstante T2 eingestellt. Diese Anordnung in Bild 8 hat den Vorteil, dass die Signaleingänge hinsichtlich ihrer mittleren Signalqualität auch bei schwierigen Empfangssituationen nach dem Range einer Prioritätenliste unterschiedlich lang zum Empfänger durchgeschaltet werden. Mit Hilfe eines Schalters, der auf an sich bekannte Weise auch als Halbleiterschalter ausgeführt werden kann, eines Operationsverstärkers, eines Ladekondensators und dreier Widerstände ist die Schaltung für einen derartigen Integrator auf besonders einfache Weise beispielsweise in Bild 9 realisiert. Diese Schaltung kann sowohl für jeden der Integratoren in Bild 4, wie auch jeweils für den Integrator in den Bildern 2 und 3 eingesetzt werden. Die Ausgestaltung von T1 und T2 erfolgt jeweils erfindungsgemäss derart, wie es in den Ansprüchen beschreiben ist.

## Patentansprüche

1. Signaldiversity-Anlage (1) für den mobilen Empfang, bestehend aus einem Empfänger (17) und einem Diversityprozessor (3), dem die Eingangssignale (2) zugeführt sind und der bei Auftreten einer Störung dem Empfänger(17) ein anderes Eingangssignal (2) zuführt, wobei im Diversityprozessor (3) ein Komparator (6) vorhanden ist, dessem ersten Eingang (7) ein Signal (9) das für die Störung representativ ist zugeführt ist und an dessem zweiten Eingang (8) eine geeignet eingestellte Spannung (V1) angelegt ist und der Komparator (6) bei Überschreiten der Schwellspannung (V) am zweiten Eingang (8) durch das Signal (9) an seinem Ausgang das Vorliegen einer Störung mit Hilfe eines binären Signals (10) anzeigt und wobei mindestens ein Integrator (11) mit Entladezeitkonstante vorgesehen ist, dem ein für die Storung representatives Signal (12, 20) zugeführt ist und dessen Integrationszeit gleich der Aufschaltzeit eines der Eingangssignale (2) ist und dessen Ausgangssignal (13) einen der beiden Eingänge des Komparators (7) zugeführt ist, dadurch gekennzeichnet, daß im Diversityprozessor (3) ein analog arbeitender Störungsdetektor vorgesehen ist; daß das am ersten Eingang des Komparators (6) zugeführte Signal ein Ausgangssignal (9) dieses Störungsdetektors ist; daß in der Signaldiversity-Anlage ein Störungshäufigkeitsdetektor (47) vorgesehen ist, dem ein Ausgangssignal (12) des analog arbeitenden Störungsdetektors (5) zugeführt ist und daß das am Ausgang (39) des Störungshäufigkeitsdetektors (47) vorhandene Ausgangssignal (39) proportional der mittleren Störhäufigkeit ist und den Integrator (11) zugeführt ist und die Zeitkonstanten (T1, T2) Lade- und Entladevorgänge im Integrator(11) mit Hilfe dieses Signals (39) mit steigender Störungshäufigkeit verkleinert werden.

2. Signaldiversity-Anlage nach Anspruch 1, dadurch gekennzeichnet, daß der Störungshäufigkeitsdetektor (47) eine auf an sich bekannte Weise gebildet PLL-Schaltung mit getrenntem Ausgang für den Mischer mit Tiefpass (22) und einen getrennten Eingang für den VCO enthält und am Ausgang des Mischers mit Tiefpass eine Sample & Hold-Schaltung (48) vorgesehen ist und der Steuereingang der Sample & Hold-Schaltung (48) über ein Monoflop (45) angesteuert ist und dieses vom binären Ausgangssignal (10) der digital arbeitenden Störerkennung (4) angesteuert ist.

3. Signaldiversity-Anlage nach Anspruch 1 oder 2, dadurch gekennzeichnet, daß das Ausgangssignal (13) des Integrators dem Ausgangssignal des Störungsdetektors am ersten Komparatoreingang (7) derart zugeführt ist, daß mit steigender Störung die Gesamtspannung am ersten Eingang (7) des Komparators (6) anhebt.

4. Signaldiversity-Anlage nach Anspruch 1 oder 2, dadurch gekennzeichnet, daß das Ausgangssignal (13) am zweiten Komparatoreingang (8) der Spannung (V1) überlagert ist derart, daß die Schwellspannung (V) mit wachsender Störung absenkt.

5. Signaldiversity-Anlage nach Anspruch 1 bis 3 dadurch gekennzeichnet, dass dem Integrator bzw. den Integratoren (11 ) mit Entladezeitkonstanten das Ausgangssignal (12) des Störungsdetektors (5) zugeführt ist.

6. Signaldiversity-Anlage nach Anspruch 1 bis 4, dadurch gekennzeichnet, dass der Integrator bzw. der Satz von Integratoren (11) mit Entladezeitkonstanten auf an sich bekannte Weise derart geschaltet sind, dass sie während der Aufschaltzeit des zugehörigen Eingangssignals (2) eine Ladezeitkonstante (T1) besitzen, die grösser gewählt ist als die mittlere Zeitdauer zwischen zwei Störungen im Fahrbetrieb, jedoch klein genug gewählt ist, dass bei Zuführung des Ausgangssignals des Integrators zum zweiten Eingang (8) des Komparators (6) das aktuelle Störsignal (9) am ersten Komparatoreingang (7) im Vergleich zum Schwellensignal V nicht zu klein wird und die Entladezeitkonstante T2 ausserhalb der Aufschaltzeit des dazugehörigen Signals (2) gross gegenüber T1 gewählt ist, jedoch nicht so gross, dass sich die Schwelle V nicht mehr an die aktuelle Empfangssituation anpassen kann. (Bild 5).

7. Signaldiversity-Anlage nach Anspruch 1 bis 5, dadurch gekennzeichnet, dass im Diversityprozessor (3) eine Signalauswahlschaltung (14) mit digitalem Adressausgangssignal (15) und ein Signalselektor (16) vorhanden ist, dem das digitale Adressausgangssignal (15) zugeführt ist und der ein Eingangssignal (2) entsprechend dem digitalen Adressausgangssignal (15) zum Empfänger durchschaltet, dass ein Satz von sovielen Integratoren (11) mit geschalteten Entladezeitkonstanten wie Eingangssignale (2) vorhanden ist, dass ein über einen Multiplexer (18) vorhanden ist, dem ein Ausgangssignal (12) des Störungsdetektors (5) zugeführt ist und dieses Signal jeweils dem Eingang des zugehörigen Integrators (11) während der Aufschaltzeit des zugehörigen Eingangssignals (2) zugeführt ist und dass ein Speicherselektor (19) vorhanden ist, der das Ausgangssignal (13) des jeweiligen Speichers (11) während der Aufschaltzeit dem betreffenden Komparatoreingang (7, 8) zuführt. (Bild 4).

8. Signaldiversity-Anlage nach Anspruch 1 bis 6, dadurch gekennzeichnet, dass im Diversityprozessor (3) nur ein Integrator (11) mit Entladezeitkonstante enthalten ist und der Integrator (11) nach jedem Schaltvorgang auf einen definierten Anfangswert eingestellt wird. (Bild 5).

## Claims

1. Signal diversity receiving system (1) for mobile reception, comprising a receiver (17) and a diversity processor (3), which processor is supplied with the input signals (2) and applies a different one of the input signals (2) to the receiver (17) when interference occurs, the diversity processor (3) comprising a comparator (6) whose first input (7) is supplied with a signal (9) representative of the interference signal and on whose second input (8) a suitably set voltage (V1) is present, the comparator (6) indicating on its output the occurrence of interference by means of a binary signal (10) when the threshold voltage (V) on the second input (8) is exceeded by the signal (9), and comprising at least an integrator (11) having a discharging time constant, which integrator is supplied with a signal (12, 20) representative of the interference and whose integration time is equal to the offering time of one of the input signals (2) and whose output signal (13) is applied to one of the two inputs of the comparator (7), characterized in that the diversity processor (3) comprises an interference detector operating in the analog mode; in that the signal applied to the first input of the comparator (6) is an output signal (9) of this interference detector; in that the signal diversity receiving system comprises an interference rate detector (47) to which is applied an output signal (12) of the interference detector (5) working in the analog mode and in that the output signal (39) available on the output (39) of the interference rate detector (47) is proportional to the average interference rate and is applied to the integrator (11) and the charging and discharging time constants (T1, T2) are shortened in the integrator (11) by means of this signal (39) if there is an increasing interference rate.

2. Signal diversity receiving system as claimed in Claim 1, characterized in that the interference rate detector (47) comprises a phase locked loop with a separate output for the low-pass mixer (22) and a separate input for the VCO and a sample and hold circuit (48) is arranged at the output of the low-pass mixer and the control input of the sample and hold circuit (48) is triggered *via* a monoflop (45) and the latter is triggered by the binary output signal (10) of the interference detector circuit (4) operating in the digital mode.

3. Signal diversity receiving system as claimed in Claim 1 or 2, characterized in that the output signal (13) of the integrator is added to the output signal of the interference detector on the first comparator input (7), so that when the interference increases, the total voltage on the first input (7) of the comparator (6) increases.

4. Signal diversity receiving system as claimed in Claim 1 or 2, characterized in that the output signal (13) on the second comparator input (8) is superimposed on the voltage (V1), so that the threshold voltage (V) decreases as the interference rate decreases.

5. Signal diversity receiving system as claimed in Claims 1 to 3, characterized in that the output signal (12) of the interference detector (5) is applied to the integrator or the integrators (11) having discharging time constants.

6. Signal diversity receiving system as claimed in Claims 1 to 4, characterized in that the integrator or set of integrators (11) respectively, having discharging time constants are arranged in a manner known *per se* so that, during the switching interval of the associated input signal (2), they have a charging time constant (T1) which is chosen to be higher than the average period of time between two interference signals during operation, but is chosen to be sufficiently small so that, when the output signal of the integrator is applied to the second input (8) of the comparator (6), the actual interference signal (9) on the first comparator input (7) does not become too small compared with the threshold voltage signal V, and the discharging time constant T2 is chosen to be long compared with T1 outside of the switching interval of the associated signal (2), but not so long that the threshold voltage V can no longer be adapted to the actual receive situation (Figure 5).

7. Signal diversity receiving system as claimed in Claims 1 to 5, characterized in that the diversity processor (3) comprises a signal selector circuit (14) having a digital address output signal (15) and a signal selector (16) which selector receives the digital address output signal (15) and switches through an input signal (2) corresponding to the digital address output signal (15) to the receiver, in that a set of as many integrators (11) as there are input signals (2) is available having switched discharging time constants and these signals are assigned to these integrators *via* a multiplexer (18) which receives an output signal (12) of the interference detector (5) and this signal is applied each time to the input of the associated integrator (11) during the switching interval of the associated input signal (2), and in that a memory selector (19) is available, which applies the output signal (13) of each memory (11) to the relevant comparator input (7, 8) during the switching interval. (Figure 4).

8. Signal diversity receiving system as claimed in Claims 1 to 6, characterized in that the diversity processor (3) comprises only a single integrator (11) having a discharging time constant and the integrator (11) is set to a determined initial value after each switching operation. (Figure 5).

## Revendications

1. Installation (1) de réception de signaux en diversité pour la réception mobile, constituée d'un récepteur (17) et d'un processeur (3) en diversité auquel sont amenés les signaux d'entrée (2) et qui, lors de l'apparition d'une perturbation, transmet au récepteur (17) un autre signal d'entrée (2), le processeur en diversité (3) contenant un comparateur (6) à la première entrée (7) duquel est amené un signal (9) représentatif de la perturbation et à la seconde entrée (8) duquel est appliquée une tension (V1) adéquatement réglée et le comparateur (6), lors du dépassement de la tension de seuil (V) à la deuxième entrée (8) indiquant par le signal (9) à sa sortie, la présence d'une perturbation à l'aide d'un signal binaire (10), au moins un intégrateur (11) à constante de temps de décharge étant prévu, auquel est amené un signal (12, 20) représentatif de la perturbation et dont le temps d'intégration est égal au temps d'application d'un des signaux d'entrée (2) et dont le signal de sortie (13) est amené à une des deux entrées du comparateur (6), caractérisée en ce que, dans le processeur (3) en diversité, est prévu un détecteur de perturbations analogique, que le signal amené à la première entrée du comparateur (6) est un signal de sortie (9) de ce détecteur de perturbations, que, dans l'installation de réception de signaux en diversité, est prévu un détecteur de fréquence de perturbations (47), auquel est amené un signal de sortie (12) du détecteur de perturbations (5) analogique et que le signal de sortie (39) présent à la sortie (39) du détecteur de fréquence de perturbations (47) est proportionnel à la fréquence moyenne des perturbations et est amené à l'intégrateur (11) et les procédures de charge et de décharge à constantes de temps (T1, T2) sont diminuées dans l'intégrateur (11) à l'aide de ce signal (39) à mesure que la fréquence des perturbations augmente.

2. Installation de réception de signaux en diversité selon la revendication 1, caractérisée en ce que le détecteur de fréquence de perturbations (47) contient un circuit PLL réalisé de manière connue, comprenant une sortie séparée pour le mélangeur à filtre passe-bas (22) et une entrée séparée pour l'oscillateur commandé par tension, un circuit échantillonneur-bloqueur (48) étant prévu à la sortie du mélangeur à filtre passe-bas et l'entrée de commande du circuit échantillonneur-bloqueur (48) étant commandée par un monoflop (45), ce dernier étant lui-même commandé par le signal binaire de sortie (10) du dispositif numérique d'identification de perturbations (4).

3. Installation de réception de signaux en diversité selon la revendication 1 ou 2, caractérisée en ce que le signal de sortie (13) de l'intégrateur est amené au signal de sortie du détecteur de perturbations à la première entrée (7) du comparateur, de telle sorte que, à mesure que les perturbations augmentent, la tension globale à la première entrée (7) du comparateur (6) s'élève.

4. Installation de réception de signaux en diversité selon la revendication 1 ou 2, caractérisée en ce que le signal de sortie (13) à la seconde entrée (8) du comparateur se superpose à la tension (V1), de sorte que la tension de seuil (V) diminue lorsque la perturbation augmente.

5. Installation de réception de signaux en diversité selon les revendications 1 à 3, caractérisée en ce que le signal de sortie (12) du détecteur de perturbations (5) est amené à l'intégrateur ou aux intégrateurs (11) à constantes de temps de décharge.

6. Installation de réception de signaux en diversité selon les revendications 1 à 4, caractérisée en ce que l'intégrateur ou le jeu d'intégrateurs (11) à constantes de temps de décharge sont connectés d'une manière connue, de telle sorte qu'au cours du temps d'application du signal d'entrée associé (2), ils possèdent une constante de temps de charge (T1) qui est sélectionnée supérieure à la durée moyenne séparant deux perturbations en service mobile, mais suffisamment petite pour que, lors de l'acheminement du signal de sortie de l'intégrateur à la seconde entrée (8) du comparateur (6), le signal perturbateur (9) effectif à la première entrée (7) du comparateur ne devienne pas trop petit par rapport au signal de seuil (V) et la constante de temps de décharge (T2), en dehors du temps d'application du signal correspondant (2), est choisie suffisamment grande par rapport à (T1) sans toutefois être telle que le seuil (V)ne puisse plus s'adàpter à la situation de réception en cours. (Fig. 5).

7. Installation de réception de signaux en diversité selon les revendications 1 à 5, caractérisée en ce que le processeur (3) en diversité contient un circuit de sélection de signaux (14) comprenant un signal numérique de sortie d'adressage (15), et un sélecteur de signaux (16) auquel est amené le signal numérique de sortie d'adressage (15) et qui transmet au récepteur un signal d'entrée (2) correspondant au signal numérique de sortie d'adressage (15), qu'un jeu d'autant d'intégrateurs (11) à constantes de temps de décharge commutées qu'il y a de signaux d'entrée (2), qu'un multiplexeur (18) est présent auquel est amené un signal de sortie (12) du détecteur de perturbations (5), ce signal étant chaque fois amené à l'entrée de l'intégrateur correspondant (11) au cours du temps d'application du signal d'entrée correspondant (2) et un sélecteur de mémoire (19) est présent, qui amène le signal de sortie (13) de la mémoire correspondante (11) au cours du temps d'application à l'entrée correspondante du comparateur (7,8). (Fig. 4).

8. Installation de réception de signaux en diversité selon les revendications 1 à 6, caractérisée en ce que le processeur (3) en diversité ne contient qu'un intégrateur (11) à constante de temps de décharge, l'intégrateur (11) étant réglé après chaque commutation à une valeur de départ définie. (Fig. 5).
